# EUROPEAN PATENT APPLICATION

(11) **EP 4 478 480 A1**
(43) Date of publication of application: **18.12.2024**
(21) Application number: 22960150.5
(22) Date of filing: 29.09.2022
(51) Int. Cl.: H01M 10/48, H01M 50/15

(54) **END COVER ASSEMBLY OF BATTERY CELL, AND BATTERY CELL, BATTERY AND ELECTRIC APPARATUS**

(71) Applicant: Contemporary Amperex Technology (Hong Kong) Limited, Central, Central And Western District (HK)
(72) Inventor: CHEN, Long, Ningde City, Fujian 352100 (CN); LIN, Denghua, Ningde City, Fujian 352100 (CN); CHEN, Xinxiang, Ningde City, Fujian 352100 (CN); HUANG, Shoujun, Ningde City, Fujian 352100 (CN); ZHENG, Yulian, Ningde City, Fujian 352100 (CN); WANG, Peng, Ningde City, Fujian 352100 (CN); JIN, Haizu, Ningde City, Fujian 352100 (CN)
(74) Representative: Kraus & Lederer PartGmbB
(86) International application number: PCT/CN2022/122894
(87) International publication number: WO 2024/065514

(57) **Abstract**

Embodiments of the present application provide an end cover assembly of a battery cell, a battery cell, a battery and an electricity-consuming apparatus. The end cover assembly includes an end cover and a detecting assembly. The end cover is provided with a concave part on a side of the end cover away from an electrode assembly of the battery cell. The detecting assembly is configured to detect a state information of the battery cell, and at least a portion of the detecting assembly is accommodated in the concave part. According to the end cover assembly in the embodiments of the present embodiment, the size of the battery cell can be reduced, the energy density of the battery cell can be improved, and the risk of the interference between the detecting assembly and a component at an outside of the battery cell can be reduced.

## Description

### TECHNICAL FIELD

The present application relates to the technical field of battery, and in particular to an end cover assembly of a battery cell, a battery cell, a battery and an electricity-consuming apparatus.

### BACKGROUND

A battery cell is widely used in an electricity device, such as a mobile phone, a laptop, a battery vehicle, an electric car, an electric plane, an electric ship, an electric toy car, an electric toy ship, an electric toy plane and an electric tool.

In the battery technology, how to reduce the size of the battery cell is a research direction.

### SUMMARY

The present application provides an end cover assembly of a battery cell, a battery cell, a battery and an electricity-consuming apparatus, which can reduce the size of the battery cell.

In a first aspect, embodiments of the present application provide an end cover assembly of a battery cell, including an end cover and a detecting assembly. The end cover is provided with a concave part on a side of the end cover away from an electrode assembly of the battery cell. The detecting assembly is configured to detect a state information of the battery cell, and at least a portion of the detecting assembly being accommodated in the concave part.

By providing the concave part on the end cover, the size of a portion of the detecting assembly protruding from a surface of the end cover away from the electrode assembly can be reduced, the space occupied by the detecting assembly can be reduced, the energy density of the battery cell can be improved, and the risk of the interference between the detecting assembly and a component at an outside of the battery cell can be reduced.

In some embodiments, the state information includes at least one of a temperature of the battery cell, a voltage of the battery cell, a deformation amount of the end cover and an internal pressure of the battery cell.

In some embodiments, the detecting assembly is entirely accommodated in the concave part.

By entirely accommodating the detecting assembly in the concave part, the size of the battery cell can be reduced to the maximum extent, and the risk of the interference between the detecting assembly and another component at the outside of the battery cell can be reduced.

In some embodiments, a portion of the detecting assembly protrudes from the concave part.

A portion of the detecting assembly protrudes from the concave part, so as to facilitate the connection between the portion of the detecting assembly and the external component at the outside of the battery cell. Furthermore, for the detecting assembly with a larger thickness, since a portion of the detecting assembly protrudes from the concave part, the structural strength of the end cover can be ensured.

In some embodiments, the end cover is provided with a convex part on a side of the end cover facing the electrode assembly, and at least a portion of the concave part is formed at a position of the end cover corresponding to the convex part.

By providing the convex part, the structural strength of the portion of the end cover corresponding to the concave part can be improved, and the risk of rupture of the end cover can be reduced. On the premise of meeting the strength requirement, by providing the convex part, a depth of the concave part can increase, so that more accommodating space can be provided for the detecting assembly, an overall size of the battery cell can be reduced, and the risk of the interference between the detecting assembly and another component at the outside of the battery cell can be reduced.

In some embodiments, the concave part is entirely formed at the position of the end cover corresponding the convex part.

The concave part entirely corresponds to the convex part, so that the structural strength of the end cover can be improved significantly, and the risk of rupture and damage of the end cover can be reduced significantly.

In some embodiments, the end cover assembly further includes an insulating member, arranged on a side of the end cover facing the electrode assembly.

By arranging the insulating member, the end cover can be insulated from the electrode assembly, so that the risk of occurring the short circuit between the end cover and the electrode assembly can be reduced.

In some embodiments, the end cover is provided with a convex part on a side of the end cover facing the electrode assembly, and at least a portion of the concave part is formed at a position of the end cover corresponding to the convex part; the insulating member is provided with an accommodating part, and at least a portion of the convex part is accommodated in the accommodating part.

At least a portion of the convex part is accommodated in the accommodating part, so that the distance between the insulating member and the end cover can be reduced, the size of the battery cell can be reduced, and the energy density of the battery cell can be improved.

In some embodiments, the end cover assembly further includes a first electrode terminal and a second electrode terminal with opposite polarities, the first electrode terminal and the second electrode terminal are mounted on the end cover, and the detecting assembly is electrically connected to the first electrode terminal and the second electrode terminal.

The detecting assembly is electrically connected to the first electrode terminal and the second electrode terminal, so as to detect the voltage, current and other related parameters of the electrode assembly through the first electrode terminal and the second electrode terminal and monitor the working state of the battery cell.

In some embodiments, the detecting assembly includes a chip, a first wire harness and a second wire harness, the chip is electrically connected to the first electrode terminal through the first wire harness and electrically connected to the second electrode terminal through the second wire harness, and the concave part is configured to accommodate at least a portion of the chip.

The chip has a larger size compared to the first wire harness and the second wire harness, for example, the chip has a larger thickness. Therefore, at least a portion of the chip is accommodated in the concave part, so that the size of a portion of the chip protruding from the concave part can be reduced, the space occupied by the detecting assembly can be reduced, and the risk of the interference between the detecting assembly and another component at the outside of the battery cell can be reduced.

In some embodiments, the concave part is configured to accommodate at least a portion of the first wire harness and at least a portion of the second wire harness.

At least a portion of the first wire harness and at least a portion of the second wire harness are accommodated in the concave part, so that the sizes of a portion of the first wire harness protruding from the concave part and a portion of the second harness protruding from the concave part can be reduced, and the risks of the interference between the first wire harness and another component and the interference between the second wire harness and another component can be reduced.

In some embodiments, the first wire harness includes a first wire harness segment, a second wire harness segment and a first connector, the first wire harness segment is connected to the chip, the second wire harness segment is connected to the first electrode terminal, and the first connector is configured to connect the first wire harness segment with the second wire harness segment.

By arranging the first connector, the assembling process of the detecting assembly can be simplified, so that it is convenient to maintain and replace the detecting assembly.

In some embodiments, the chip includes at least one of a voltage sensor, a temperature sensor and a displacement sensor, the voltage sensor is electrically connected to the first wire harness and the second wire harness, and both of the temperature sensor and the displacement sensor are connected to the end cover. The chip can detect the temperature of the battery cell and the deformation and the voltage of the end cover.

In some embodiments, the end cover assembly further includes an insulating attaching sheet, which is attached to a side of the end cover away from the electrode assembly.

By attaching the insulating attaching sheet to a surface of the end cover, the insulating attaching sheet can separate the end cover from another component at the outside of the battery cell, so as to reduce the risk of the short circuit.

In some embodiments, the insulating attaching sheet is provided with an avoiding through hole, configured to expose at least a portion of the detecting assembly.

The avoiding through hole exposes at least a portion of the detecting assembly, so as to facilitate the connection between the detecting assembly and the component at the outside of the battery cell. In addition, the avoiding through hole can reduce the risk of interference between the detecting assembly and the insulating attaching sheet, and improve the connection strength between the insulating attaching sheet and the end cover.

In a second aspect, embodiments of the present application provide a battery cell including a casing, an electrode assembly and the end cover assembly according to any one of the embodiments in the first aspect. The casing is provided with an opening. The electrode assembly is accommodated in the casing. The end cover of the end cover assembly is configured to cover the opening.

In a third aspect, embodiments of the present application provide a battery including the end cover assembly according to any one of the embodiments in the first aspect, or the battery cell according to any one of the embodiments in the second aspect.

In a fourth aspect, embodiments of the present application provide an electricity-consuming apparatus including the battery according to any one of the embodiments in the third aspect, which is configured to supply electric power.

### BRIEF DESCRIPTION OF THE DRAWINGS

In order to more clearly illustrate the technical solutions of the embodiments of the present application, the drawings to be used in the description of the embodiments of the present application will be described briefly below. Obviously, the drawings in the following description are merely some embodiments of the present application. For those skilled in the art, other drawings can also be obtained according to these drawings without the inventive labor.
Fig. 1 shows a structural schematic view of a vehicle according to some embodiments of the present application;
Fig. 2 shows an exploded schematic view of a battery according to some embodiments of the present application;
Fig. 3 shows a perspective structural schematic view of a battery cell according to some embodiments of the present application;
Fig. 4 shows an exploded schematic view of the battery cell shown in Fig. 3;
Fig. 5 shows a structural schematic view of an end cover assembly according to some embodiments of the present application;
Fig. 6 shows a structural schematic view of the end cover assembly shown in Fig. 5;
Fig. 7 shows another structural schematic view of the end cover assembly shown in Fig. 5;
Fig. 8 shows an exploded schematic view of an end cover assembly according to some other embodiments of the present application;
Fig. 9 shows a front view of the end cover assembly according to some other embodiments of the present application;
Fig. 10 shows a cross-sectional view at line A-A in Fig. 9;
Fig. 11 shows a structural schematic view of a detecting assembly of the end cover assembly shown in Fig. 5;
Fig. 12 shows an exploded schematic view of an end cover assembly according to some other embodiments of the present application;
Fig. 13 shows an exploded schematic view of an end cover assembly according to some other embodiments of the present application; and
Fig. 14 shows an exploded schematic view of an end cover assembly according to some other embodiments of the present application.

The reference numerals in the embodiments are listed as follows:
1. vehicle; 2. battery; 3. controller; 4. motor; 5. battery cell; 6. end cover assembly; 61. end cover; 611. concave part; 611a. first accommodating region; 611b. second accommodation region; 611c. third accommodation region; 612. convex part; 612a. first protrusion; 612b. second protrusion; 612c. third protrusion; 613. terminal hole; 614. sixth through hole; 62. detecting assembly; 621. chip; 622. first wire harness; 623. second wire harness; 624. first wire harness segment; 625. second wire harness segment; 626. first connector; 63. insulating member; 631. accommodating part; 64. first electrode terminal; 65. second electrode terminal; 66. insulating attaching sheet; 661. avoiding through hole; 662. base layer; 663. bonding layer; 664. first through hole; 665. second through hole; 666. third through hole; 667. fourth through hole; 668. fifth through hole; 7. housing; 71. first housing portion; 72. second housing portion; 73. accommodating space; 8. casing; 9. electrode assembly.

### DETAILED DESCRIPTION

In order to make the objects, technical solutions and advantages of the embodiments of the present application more clear, the technical solutions of the embodiments of the present application will be clearly and completely described below in conjunction with the drawings of the embodiments of the present application. It is apparent that the described embodiments are a portion of the embodiments of the present application, and not all of them. Based on the embodiments of the present application, all other embodiments obtained by those skilled in the art without the creative labor fall within the scope of the present application.

Unless otherwise defined, technical terms or scientific terms used in the present disclosure should be interpreted according to common meanings thereof as commonly understood by those of ordinary skills in the art. The terms used in the description in the present application are only for the purpose of describing specific embodiments and are not intended to limit the present application. The terms "including" and "having" in the description and the claims of the present application and the above description of the drawings, and any variations thereof are intended to cover non-exclusive inclusions. The terms "first", "second", etc. in the description and the claims of the present application or the above-mentioned drawings are used to distinguish different objects, rather than to describe a specific order or a primary-secondary relationship.

The "embodiments" referred in the present application means that specific features, structures or characteristics described in conjunction with the embodiments may be included in at least one embodiment of the present application. This word appeared in various places in the description does not necessarily refer to the same embodiment, nor is it an independent or alternative embodiment mutually exclusive with other embodiments.

In the description of the present application, it should be noted that, unless otherwise clearly specified and limited, the terms "mount", "connecting" and "connection" and "attach" should be understood in a broad sense, for example, it can be a fixed connection, a detachable connection, or an integral connection, it can be connected directly, it can be connected indirectly through an intermedium, or it can be a communication between two elements at insides thereof. For those of ordinary skill in the art, the specific meaning of the above-mentioned terms in the present application can be understood according to specific situations.

The term "and/or" in the present application is merely an association relationship describing associated objects, which means that there can be three types of relationships. For example, "A and/or B" can mean three cases that there is only A, there are A and B at the same time, and there is only B. In addition, the punctuation mark "/" in the present application generally indicates that the related objects of the preceding content and following content are in an "or" relationship.

In the embodiments of the present application, the same reference numerals denote the same components, and for the sake of brevity, in different embodiments, detailed descriptions of the same components are omitted. It should be understood that the thickness, length, width and other sizes of the various components in the embodiments of the present application shown in the drawings, as well as the overall thickness, length and width, etc., of the integrated device are only exemplary descriptions, and should not constitute any limitation to the present application.

The "plurality" in the present application refers to two or more (including two).

In the present application, a battery cell may include a lithium-ion secondary battery cell, a lithium-ion primary battery cell, a lithium-sulfur battery cell, a sodium lithium ion battery cell, a sodium ion battery cell, a magnesium ion battery cell and the like, which is not limited in the embodiments of the present application. The battery cell can be in a shape of a cylinder, a flatten body, a cuboid or other shapes, which is not limited in the embodiments of the present application.

The battery mentioned in the embodiments of the present application refers to a single physical module that includes one or more battery cells to provide higher voltage and capacity. For example, the battery mentioned in the present application may include a battery module, a battery pack or the like. The battery generally includes a housing for packaging one or more battery cells. The housing can prevent liquid or other foreign objects from affecting the electrical charge or the electrical discharge of the battery cell.

The battery cell includes an electrode assembly and an electrolyte, and the electrode assembly includes a positive electrode plate, a negative electrode plate and a separator. The battery cell mainly relies on the movement of metal ions between the positive electrode plate and the negative electrode plate to work. The positive electrode plate includes a positive electrode applying region and a positive electrode tab connected to the positive electrode applying region. The positive electrode active material layer is applied on the positive electrode applying region and is not applied on the positive electrode tab. Taking a lithium ion battery as an example, the material of the positive electrode current collector may be aluminum, and the positive electrode active material layer includes a positive electrode active material, which may be lithium cobaltate, lithium iron phosphate, ternary lithium, lithium manganite or the like. The negative electrode plate includes a negative electrode current collector and a negative electrode active material layer applied on the surface of the negative electrode current collector. The negative electrode current collector includes a negative electrode applying region and a negative electrode tab connected to the negative electrode applying region. The negative electrode active material layer is applied on the negative electrode applying region and is not applied on the negative electrode tab. The material of the negative electrode current collector may be copper, and the negative electrode active material layer includes a negative electrode active material, which may be carbon, silicon or the like. The material of the separator may be PP (polypropylene), PE (polyethylene) or the like.

The battery cell further includes an outer casing. An accommodating cavity is formed at the inside of the outer casing to accommodate the electrode assembly. The outer casing can protect the electrode assembly at the outside, so as to prevent the charging or discharging of the electrode assembly from being affected by the foreign objects at the outside.

The battery cell further includes a casing and an end cover, the casing is provided with an opening, and the end cover covers the opening of the casing and encloses with the casing to form an accommodating cavity for accommodating the electrode assembly. The casing and end cover can protect the electrode assembly at the outside, so as to prevent the charging or discharging of the electrode assembly from being affected by external foreign obj ects.

During a cycling process of the battery cell, an abnormal condition may occur. For example, after experiencing a plurality of charging and discharging cycles, the battery cell may occur the side reaction and continuously produce gas at the inside of the battery cell. The gas will increase the air pressure at the inside of the battery cell, which may lead to the risk of the deformation and rupture of the outer casing. In addition, for example, when a short circuit occurs at the inside of the battery cell, the battery cell generates heat and heats up, so that it may lead to the risk of thermal runaway of the battery cell.

During using the battery, if the abnormal situation of the battery cell cannot be detected and dealt with in time, it will lead to the deterioration of the battery cell and cause the safety accident.

The inventors intend to mount a detecting assembly on the end cover, which can detect a state information of the battery cell in real time, thereby regulating the battery cell based on the state information, improving the cycling performance of the battery cell, reducing the risk of safety, and prolonging the cycling life of the battery cell.

However, the inventors find that when the detecting assembly is arranged on the end cover, the detecting assembly occupies the space, which may lead to the size of the battery cell increasing, and interferes with another component, which may result in the inability to assemble.

In view of this, the present application provides a technical solution. By providing a concave part on the end cover to accommodate at least a portion of the detecting assembly, the size of the battery cell can be reduced and the risk of interference between the detecting assembly and another component can be reduced.

The battery cell described in the embodiments of the present application is applicable to the battery and an electricity-consuming apparatus using the battery cell.

The electricity-consuming apparatus may be a vehicle, a mobile phone, a portable device, a notebook computer, a ship, a spacecraft, an electric toy, an electric tool or the like. The vehicle may be a fuel car, a gas car or a new energy car, and the new energy car can be a pure electric car, a hybrid car, a range-extended car or the like; the spacecraft may include an airplane, a rocket, a space shuttle, a space ship or the like; the electric toy may include a fixed-type or mobile-type electric toy, such as a game player, an electric car toy, an electric ship toy, an electric airplane toy or the like; the power tool may include a metal cutting power tool, a grinding power tool, an assembly power tool and a railway power tools, such as an electric drill, an electric grinder, an electric wrench, an electric screwdriver, an electric hammer, an impact drill, a concrete vibrator, an electric planers or the like. Embodiments of the present application do not impose specific limitation to the above-mentioned electricity-consuming apparatus.

For the convenience of explanation, the following embodiments take a vehicle being as the electricity-consuming apparatus as an example to illustrate.

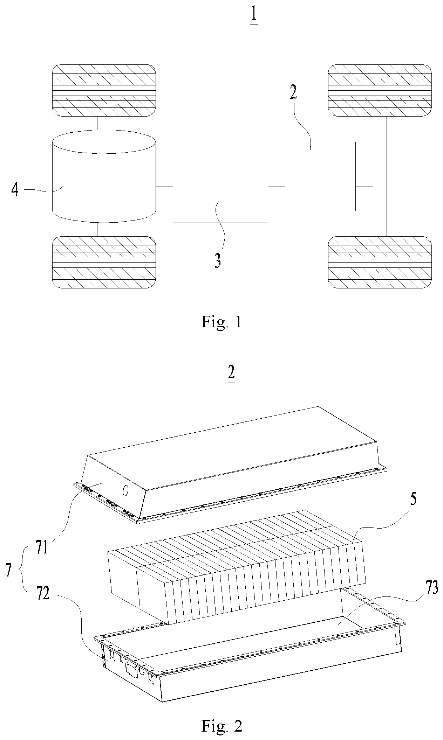

Fig. 1 shows a structural schematic view of a vehicle according to some embodiments of the present application.

As shown in Fig. 1, a battery 2 may be arranged at the inside of the vehicle 1, and the battery 2 may be arranged in the bottom, the front or the back of the vehicle 1. The battery 2 can be used to supply power to the vehicle 1, for example, the battery 2 can be used as an operating power source of the vehicle 1.

The vehicle 1 may further include a controller 3 and a motor 4. The controller 3 can be used to control the battery 2 to supply power to the motor 4, for example, for satisfying the work electricity needs of the vehicle 1 during starting, navigating and driving.

In some embodiments of the present application, the battery 2 can not only serve as an operating power source for the vehicle 1, but also as a driving power source for the vehicle 1, so as to replace or partially replace the fuel or the natural gas and provide the driving power for the vehicle 1.

In the battery 2, there may be one or more battery cells. If there are a plurality of battery cells, the plurality of battery cells can be connected in series, in parallel or in hybrid. The hybrid connection means that the plurality of battery cells are connected in series and parallel in combination. The plurality of battery cells can be directly connected in series, parallel or hybrid together, and then a whole composed of the plurality of battery cells can be fixed on a load-bearing part. Of course, alternatively, the plurality of battery cells can be connected in series, in parallel or hybrid to form the battery module. A plurality of battery modules are connected in series, in parallel or in hybrid to form a whole and are fixed on the load-bearing part.

Fig. 2 shows an exploded structural schematic view of a battery according to some embodiments of the present application.

As shown in Fig. 2, the battery 2 includes a housing 7 and a battery cell 5 which is accommodated in the housing 7.

The housing 7 is used to accommodate the battery cell 5, and the housing 7 can be of various structural forms. In some embodiments, the housing 7 may include a first housing portion 71 and a second housing portion 72. The first housing portion 71 and the second housing portion 72 cover each other. The first housing portion 71 and the second housing portion 72 jointly define an accommodating space 73 for accommodating the battery cell 5. The second housing portion 72 may be a hollow structure having an opening at an end, and the first housing portion 71 may be a plate-like structure. The first housing portion 71 is covered with the side of the second housing portion 72 with the opening to form the housing 7 having the accommodating space 73. Or each of the first housing portion 71 and the second housing portion 72 may be a hollow structure having an opening on a side. The side of the first housing portion 71 with the opening is covered with the side of the second housing portion 72b with the opening to form the housing 7 having the accommodation space 73. Of course, the first housing portion 71 and the second housing portion 72 may be in various shapes, such as a cylinder and a rectangular parallelepiped.

In order to improve the sealing performance after the first housing portion 71 is connected with the second housing portion 72, a sealing member, such as a sealant and a sealing ring, may be arranged between the first housing portion 72 and the second housing portion 72.

It can be assumed that the first housing portion 71 is covered with the second housing portion 72, the first housing portion 71 can be called an upper housing cover, and the second housing portion 72 can be called a lower housing portion.

In the battery 2, there may be one or more battery cells 5. If there are a plurality of battery cells 5, the plurality of battery cells 5 can be connected in series, in parallel or in hybrid. The hybrid connection means that the plurality of battery cells 5 are connected in series and parallel in combination. The plurality of battery cells 5 can be directly connected in series, parallel or hybrid together, and then a whole composed of the plurality of battery cells 5 can be accommodated in the housing 7. Or the plurality of battery cells 5 can be connected in series, in parallel or hybrid to form the battery module. A plurality of battery modules are connected in series, in parallel or in hybrid to form a whole and are accommodated in the housing 7.

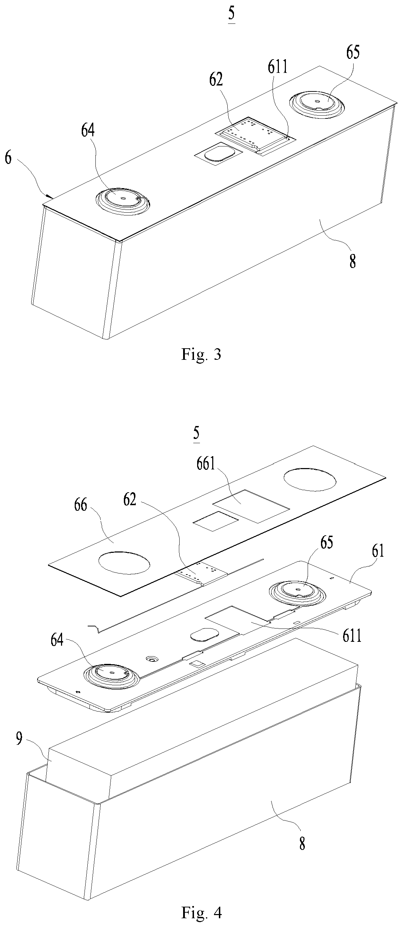

Fig. 3 shows a perspective structural schematic view of a battery cell according to some embodiments of the present application; Fig. 4 shows an exploded structural schematic view of the battery cell shown in Fig. 3.

As shown in Fig. 3 and Fig. 4, the embodiments of the present application provide a battery cell 5 including an electrode assembly 9, a casing 8, and an end cover assembly 6. The casing 8 is provided with an opening. The electrode assembly 9 is accommodated in the casing 8. The end cover assembly 6 is used to cover the opening.

The electrode assembly 9 includes a positive electrode plate and a negative electrode plate. Exemplarily, electrode assembly 9 generates the electrical energy through the oxidation and reduction reaction during the insertion/extraction of ions in the positive electrode plate and the negative electrode plate. Optionally, the electrode assembly 9 further includes a separator, which is used to insulate and separate the positive electrode plate and the negative electrode plate.

The electrode assembly 9 may be a wound electrode assembly, a stacked electrode assembly or another type of electrode assembly.

There may be one or more electrode assemblies 9. When a plurality of electrode assemblies 9 are provided, the plurality of electrode assemblies 9 can be arranged and stacked in layers.

The casing 8 is a hollow structure. The shape of casing 8 may be determined based on the specific shape of electrode assembly 9. For example, if the electrode assembly 9 is a cuboid structure, a cuboid casing may be selected; if electrode assembly 9 is a cylindrical structure, a cylindrical casing may be selected.

The material of casing 8 may be various, for example, the material of casing 8 may be metal or plastic. Optionally, the material of the casing 8 may be copper, iron, aluminum, steel, aluminum alloy or the like.

In some embodiments, an end of the casing 8 is provided with an opening, and there is one end cover assembly 6 which covers the opening. In some other embodiments, both two ends of the casing 8 opposite to each other have openings, and there are two end cover assemblies 6 which cover the openings at two ends of the casing 8 respectively.

In some embodiments, the end cover assembly 6 includes an end cover 61, which is used to cover the opening of the casing 8. The shape of the end cover 61 may be matched with the shape of the casing 8 to fit the casing 8. Optionally, the end cover 61 may be made of the material with a certain hardness and strength (such as aluminum alloy), so that the end cover 61 is less prone to deformation when subjected to compression and collision, the battery cell 5 can have higher structural strength, and the safety performance can be improved.

The end cover 61 and the casing 8 enclose and form an accommodating cavity for accommodating the electrode assembly 9 and the electrolyte liquid.

In some embodiments, the end cover assembly 6 further includes a first electrode terminal 64 and a second electrode terminal 65 arranged on the end cover 61.

The polarity of the first electrode terminal 64 and the polarity of the second electrode terminal 65 are opposite. For example, if the first electrode terminal 64 is a positive electrode terminal, the second electrode terminal 65 will be a negative electrode terminal; if the first electrode terminal 64 is the negative electrode terminal, the second electrode terminal 65 will be the positive electrode terminal.

The first electrode terminal 64 and the second electrode terminal 65 are used to electrically connect the electrode assembly 9 to a circuit at the outside of the battery cell 5, so as to achieve the charging and discharging of the electrode assembly 9.

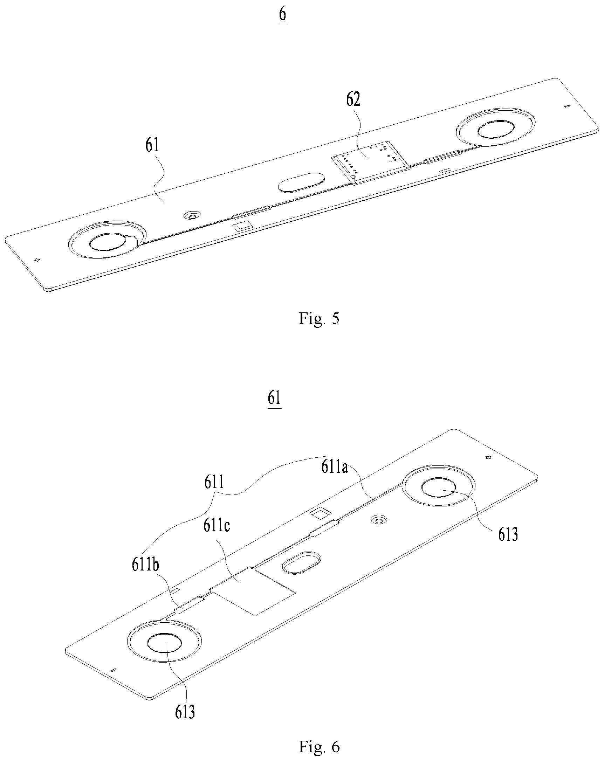

Fig. 5 shows a structural schematic view of an end cover assembly according to some embodiments of the present application; Fig. 6 shows a structural schematic view of the end cover assembly shown in Fig. 5.

As shown in Fig. 5 and Fig. 6, the end cover assembly 6 of the battery cell 5 in the embodiments of the present application includes an end cover 61 and a detecting assembly 62. The end cover 61 is provided with a concave part 611 on a side of the end cover away from the electrode assembly 9 of the battery cell 5; the detecting assembly 62 is used to detect the state information of the battery cell 5, and at least a portion of the detecting assembly 62 is accommodated in the concave part 611.

The state information of the battery cell 5 is an information that characterizes a working state of the battery cell 5. Exemplarily, the state information of the battery cell 5 may include at least one of the temperature of the battery cell 5, the voltage of the battery cell 5, the deformation amount of the end cover 61, the internal pressure of the battery cell 5, the gas composition at the inside of the battery cell 5, the deformation amount of the electrode assembly 9, the dendritic crystal growing state at the inside of the electrode assembly 9, and the quantity of electricity at the inside of the battery cell 5.

In the embodiments of the present application, a portion of the detecting assembly 62 can be accommodated in the concave part 611, or the detecting assembly 62 can be entirely accommodated in the concave part 611.

The the detecting assembly 62 can be entirely accommodated in the concave part 611, or a portion of the detecting assembly 62 can be accommodated in the concave part 611. Exemplarily, a portion of the detecting assembly 62 can pass through the end cover 61 and extend into the casing 8 of the battery cell 5 to detect the state information at the inside of the battery cell 5.

In the embodiments of the present application, the detecting assembly 62 can detect the state information of the battery cell 5 in real time, thereby regulating the battery cell 5 based on the state information of the battery cell 5, improving the cycling performance of battery cell 5, reducing the risk of safety, and prolonging the cycling life of the battery cell 5.

By arranging the concave part 611 on the end cover 61, the size of a portion of the detecting assembly 62 protruding from a surface of the end cover 61 away from the electrode assembly 9 can be reduced, the space occupied by the detecting assembly 62 can be reduced, the energy density of the battery cell 5 can be improved, and the risk of interference between the detecting assembly 62 and the component at the outside of the battery cell 5 can be reduced.

In some embodiments, the state information includes at least one of the temperature of the battery cell 5, the voltage of the battery cell 5, the deformation amount of the end cover 61 and the internal pressure of the battery cell 5.

Exemplarily, the detecting assembly 62 can detect the temperature of the end cover 61 and use the detected temperature as the temperature of the battery cell 5. For example, the detecting assembly 62 may include a temperature sensor, which is attached against the end cover 61 to detect the temperature of the end cover 61; alternatively, the temperature sensor may be connected to the end cover 61 through a thermal-conducting adhesive to detect the temperature of the end cover 61.

Exemplarily, the detecting assembly 62 may include a voltage sensor, which may be electrically connected to the positive electrode terminal and negative electrode terminal of the battery cell 5 to detect the voltage of the battery cell 5.

Exemplarily, the detecting assembly 62 may include a displacement sensor, which may be against the end cover 61. The displacement sensor can measure the deformation of the end cover 61 during the charging and discharging process of the battery cell 5. Exemplarily, the detecting assembly 62 can calculate the change of the internal pressure of the battery cell 5 by detecting the deformation amount of the end cover 61.

In some embodiments, the detecting assembly 62 is entirely accommodated in the concave part 611.

In this embodiment, the detecting assembly 62 is entirely accommodated in the concave part 611, which means that a surface of the detecting assembly 62 away from the electrode assembly 9 is flush with a surface of the end cover 61 away from the electrode assembly 9, or a surface of the detecting assembly 62 away from the electrode assembly 9 is closer to the electrode assembly 9 compared to a surface of the end cover 61 away from the electrode assembly 9.

By entirely accommodating the detecting assembly 62 in the concave part 611, the size of the battery cell 5 can be reduced to the maximum extent, and the risk of the interference between the detecting assembly 62 and another component at the outside of the battery cell 5 can be reduced.

In some embodiments, a portion of the detecting assembly 62 protrudes from the concave part 611.

In this embodiment, a portion of the detecting assembly 62 protrudes from the concave part 611, which means that the portion of the detecting assembly 62 is located at the outside of the concave part 611.

A portion of the detecting assembly 62 protrudes from the concave part 611, so as to facilitate the connection between the portion of the detecting assembly 62 and the external component at the outside of the battery cell 5. Furthermore, for the detecting assembly 62 with a larger thickness, since a portion of the detecting assembly 62 protrudes from the concave part 611, the structural strength of the end cover 61 can be ensured.

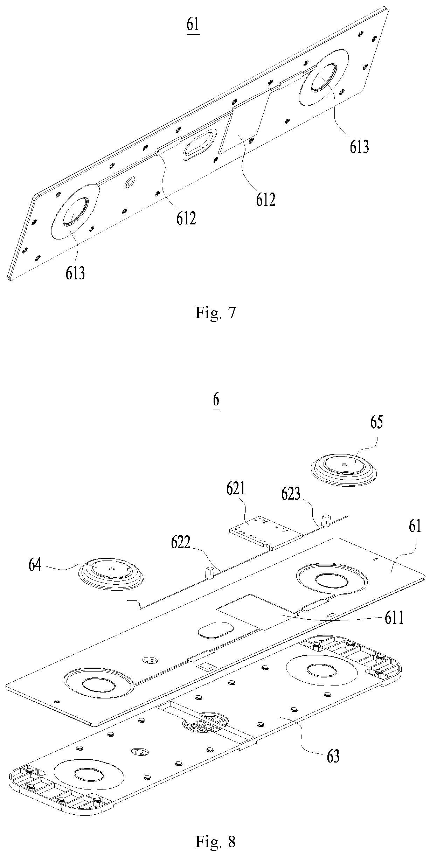

Fig. 7 shows another structural schematic view of the end cover assembly shown in Fig. 5.

As shown in Fig. 7, in some embodiments, the end cover 61 is provided with a convex part 612 on a side of end cover the facing the electrode assembly 9; at least a portion of the concave part 611 is formed at a position of the end cover 61 corresponding to the convex part 612.

In this embodiment, the convex part 612 and the concave part 611 may completely correspond to each other, or a portion of the concave part 611 may correspond to the convex part 612.

By arranging the convex part 612, the structural strength of the portion of the end cover 61 corresponding to the concave part 611 can increase, and the risk of rupture of the end cover 61 can be reduced. On the premise of meeting the strength requirement, by arranging the convex part 612, a depth of the concave part 611 can increase, so that more accommodating space can be provided for the detecting assembly 62, an overall size of the battery cell 5 can be reduced, and the risk of the interference between the detecting assembly 62 and another component at the outside of the battery cell 5 can be reduced.

In some embodiments, the concave part 611 is entirely formed at the position of the end cover 61 corresponding the convex part 612.

The concave part 611 entirely corresponds to the convex part 612, so that the structural strength of the end cover 61 can be improved significantly, and the risk of rupture and damage of the end cover 61 can be reduced significantly.

Fig. 8 shows an exploded schematic view of an end cover assembly according to some other embodiments of the present application.

As shown in Fig. 8, in some embodiments, the end cover assembly 6 further includes an insulating member 63, arranged on a side of the end cover 61 facing the electrode assembly 9.

The insulating member 63 may be made of the plastic material, rubber material or other insulating materials.

The insulating member 63 may be a plate-like structure, with both the length and width smaller than the length and width of the end cover 61 in the same directions respectively and larger than the length and width of the electrode assembly 9 in the same directions respectively.

By arranging the insulating member 63, the end cover 61 can be insulated from the electrode assembly 9, so that the risk of occurring the short circuit between the end cover 61 and the electrode assembly 9 can be reduced.

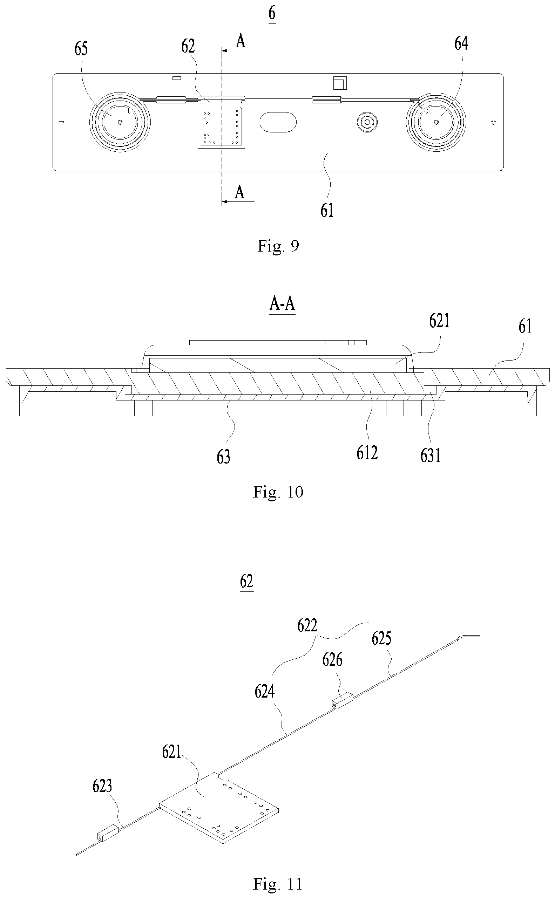

Fig. 9 shows a front view of the end cover assembly according to some other embodiments of the present application; Fig. 10 shows a cross-sectional view at line A-A in Fig. 9.

As shown in Fig. 9 and Fig. 10, in some embodiments, the end cover 61 is provided with a convex part 612 on a side of the end cover facing the electrode assembly 9, and at least a portion of the concave part 611 is formed at a position of the end cover 61 corresponding to the convex part 612; the insulating member 63 is provided with an accommodating part 631, and at least a portion of the convex part 612 is accommodated in the accommodating part 631.

The accommodating part 631 may include a concave slot, a hole, a notch or other structures which can provide a space for the convex part 612 and improve the tightness of the insulating member 63 attached to the end cover 61.

At least a portion of the convex part 612 is accommodated in the accommodating part 631, so that the distance between the insulating member 63 and the end cover 61 can be reduced, the size of the battery cell 5 can be reduced, and the energy density of the battery cell 5 can be improved.

In some embodiments, the end cover assembly 6 further includes a first electrode terminal 64 and a second electrode terminal 65 with opposite polarities, the first electrode terminal 64 and the second electrode terminal 65 are mounted on the end cover 61, and the detecting assembly 62 is electrically connected to the first electrode terminal 64 and the second electrode terminal 65.

The detecting assembly 62 is electrically connected to the first electrode terminal 64 and the second electrode terminal 65, so as to detect the voltage, current and other related parameters of the electrode assembly 9 through the first electrode terminal 64 and the second electrode terminal 65 and monitor the working state of the battery cell 5.

In some embodiments, the end cover 61 is provided with two terminal holes 613, which penetrate through the end cover 61. The first electrode terminal 64 and the second electrode terminal 65 are mounted in the two terminal holes 613 respectively. By providing the terminal holes 613, the first electrode terminal 64 can be electrically connected to the electrode assembly 9, and the second electrode terminal 65 can be electrically connected to the electrode assembly 9.

In some embodiments, the detecting assembly 62 includes a chip 621, a first wire harness 622 and a second wire harness 623, the chip 621 is electrically connected to the first electrode terminal 64 through the first wire harness 622 and electrically connected to the second electrode terminal 65 through the second wire harness 623, and the concave part 611 is configured to accommodate at least a portion of the chip 621.

The first wire harness 622 can transmit an electric potential signal of the first electrode terminal 64 to the chip 621, and the second wire harness 623 can transmit an electric potential signal of the second electrode terminal 65 to the chip 621. The chip 621 can calculate the voltage of the battery cell 5 based on the electric potential signal of the first electrode terminal 64 and the electric potential signal of the second electrode terminal 65. A control component can respond and adjust the working state of battery cell 5 based on the voltage signal detected by the chip 621, thereby improving the charging and discharging performance of the battery cell 5.

The chip 621 has a larger size compared to the first wire harness 622 and the second wire harness 623, for example, the chip has a larger thickness. Therefore, at least a portion of the chip 621 is accommodated in the concave part 611, so that the size of a portion of the chip 621 protruding from the concave part 611 can be reduced, the space occupied by the detecting assembly 62 can be reduced, and the risk of the interference between the detecting assembly 62 and another component at the outside of the battery cell 5 can be reduced.

In some embodiments, the concave part 611 is configured to accommodate at least a portion of the first wire harness 622 and at least a portion of the second wire harness 623.

At least a portion of the first wire harness 622 and at least a portion of the second wire harness 623 are accommodated in the concave part 611, so that the sizes of a portion of the first wire harness 622 protruding from the concave part 611 and a portion of the second harness protruding 623 from the concave part 611 can be reduced, and the risks of the interference between the first wire harness and another component and the interference between the second wire harness and another component can be reduced.

Fig. 11 shows a structural schematic view of a detecting assembly of the end cover assembly shown in Fig. 5.

As shown in Fig. 11, in some embodiments, the first wire harness 622 includes a first wire harness segment 624, a second wire harness segment 625 and a first connector 626. The first wire harness segment 624 is connected to the chip 621, the second wire harness segment 625 is connected to the first electrode terminal 64, and the first connector 626 is configured to connect the first wire harness segment 624 with the second wire harness segment 625.

By arranging the first connector 626, the assembling process of detecting assembly 62 can be simplified, so that it is convenient to maintain and replace the detecting assembly 62.

Exemplarily, when the end cover assembly 6 is assembled, firstly, the first wire harness segment 624 is connected to the chip 621, and the second wire harness segment 625 can be connected to the first electrode terminal 64; then each of the chip 621 and the first electrode terminal 64 can be mounted on the end cover 61; finally, the first connector 626 can be used to connect the first wire harness segment 624 with the second wire harness segment 625. When the chip 621 malfunctions, the first connector 626 is disconnected to disconnect the chip 621 with the first electrode terminal 64, so that it is convenient to replace or repair the chip 621.

In some embodiments, the first connector 626 includes a plug and a socket, one of which is connected to the first wire harness segment 624 and the other is connected to the second wire harness segment 625.

The second wire harness 623 includes a third wire harness segment, a fourth wire harness segment and a second connector. The third wire harness segment is connected to the chip 621, the fourth wire harness segment is connected to the second electrode terminal 65, and the second connector is used to connect the third wire harness segment with the fourth wire harness segment.

In some embodiments, the chip 621 includes the voltage sensor, which is electrically connected to the first wire harness 622 and the second wire harness 623. The voltage sensor is electrically connected to the first electrode terminal 64 through the first wire harness 622, and electrically connected to the second electrode terminal 65 through the second wire harness 623, so as to detect the electric potential difference between the first electrode terminal 64 and the second electrode terminal 65 and obtain the current working voltage of the battery cell 5.

In some embodiments, the chip 621 includes the temperature sensor, which is connected to the end cover 61. The temperature sensor can be directly connected to the end cover 61 or indirectly connected to the end cover 61 through a thermal-conducting structure (such as the thermal-conducting adhesive). The temperature sensor can detect the temperature of the end cover 61 to obtain the current working temperature of the battery cell 5, which is convenient for the control component to adjust the working state of battery cell 5.

In some embodiments, the chip 621 includes the displacement sensor, which is connected to the end cover 61. The displacement sensor can measure the deformation of the end cover 61 during the charging and discharging process of the battery cell 5. By detecting the deformation amount of the end cover 61, the change of the internal pressure of the battery cell 5 can also be calculated.

In some embodiments, the concave part 611 includes a first accommodating region 611a, a second accommodating region 611b and a third accommodating region 611c. At least a portion of the chip 621 is accommodated in the third accommodating region 611c, the first accommodating region 611a and the second accommodating region 611b are located at two sides of the third accommodating region 611c, respectively. At least a portion of the first wire harness 622 is accommodated in the first accommodating region 611a, and at least a portion of the second wire harness 623 is accommodated in the second accommodating region 611b.

In some embodiments, the first accommodating region 611a and the second accommodating region 611b are strip-shaped, and the third accommodating region 611c is square.

In some embodiments, an end of the first accommodating region 611a away from the third accommodating region 611c is communicated with a terminal hole 613 provided with the first electrode terminal 64 to guide the first wire harness 622 to be connected to the first electrode terminal 64. An end of the second accommodating region 611b away from the third accommodating region 611c is communicated with a terminal hole 613 provided with the second electrode terminal 65 to guide the second wire harness 623 to be connected to the second electrode terminal 65.

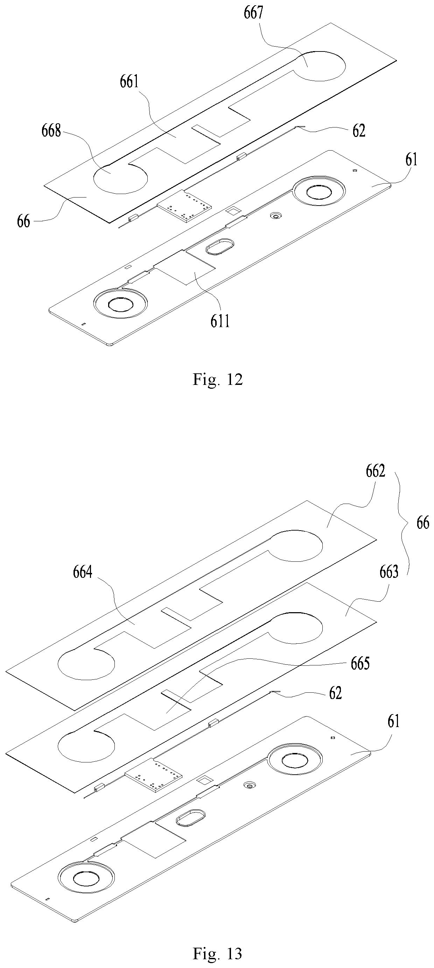

Fig. 12 shows an exploded schematic view of an end cover assembly according to some other embodiments of the present application.

As shown in Fig. 12, in some embodiments, the end cover assembly 6 further includes an insulating attaching sheet 66, attached to a side of the end cover 61 away from the electrode assembly 9.

Exemplarily, the insulating attaching sheet 66 may be attached to the surface of the end cover 61 by bonding, applying or other means.

By attaching the insulating attaching sheet 66 to a surface of the end cover 61, the insulating attaching sheet 66 can separate the end cover 61 from another component at the outside of the battery cell 5, so as to reduce the risk of the short circuit.

In some embodiments, the insulating attaching sheet 66 is provided with an avoiding structure for avoiding at least a portion of the detecting assembly 62.

The avoiding structure can avoid only a portion of the detecting assembly 62, or can avoid the entire detecting assembly 62.

The avoiding structure may include a hole, a slot, a notch or other structures which can provide a space for the detecting assembly 62 and reduce the interference between the insulating attaching sheet 66 and the detecting assembly 62.

When the detecting assembly 62 protrudes from the concave part 611, the insulating attaching sheet 66 will curl up and be difficult to tightly fit with the end cover 61. By providing the avoiding structure on the insulating attaching sheet 66, the risk of interference between the detecting assembly 62 and the insulating attaching sheet 66 can be reduced, and the connection strength between the insulating attaching sheet 66 and the end cover 61 can be improved.

In some embodiments, the insulating attaching sheet is provided with an avoiding through hole 661, configured to expose at least a portion of the detecting assembly 62. The avoiding structure as described above includes the avoiding through hole 661.

The avoiding through hole 661 exposes at least a portion of the detecting assembly 62, so as to facilitate the connection between the detecting assembly 62 and the component at the outside of the battery cell 5. In addition, the avoiding through hole 661 can reduce the risk of interference between the detecting assembly 62 and the insulating attaching sheet 66, and improve the connection strength between the insulating attaching sheet 66 and the end cover 61.

Exemplarily, a portion of the detecting assembly 62 exposed through the avoiding through hole 661 can be connected to the control component of the battery through a cable.

In some embodiments, at least a portion of the chip 621 is exposed through the avoiding through hole 661.

In some embodiments, at least a portion of the first connector 626 and/or at least a portion of the second connector is exposed through the avoiding through hole 661.

In some embodiments, the insulating attaching sheet 66 further includes a fourth through hole 667, and the first electrode terminal 64 passes through the insulating attaching sheet 66 through the fourth through hole 667.

In some embodiments, the insulating attaching sheet 66 further includes a fifth through hole 668, and the second electrode terminal 65 passes through the insulating attaching sheet 66 through the fifth through hole 668.

Fig. 13 shows an exploded schematic view of an end cover assembly according to some other embodiments of the present application.

As shown in Fig. 13, in some embodiments, the insulating attaching sheet 66 includes a base layer 662 and a bonding layer 663. The bonding layer 663 is located between the end cover 61 and the base layer 662 and is bonded to the end cover 61 and the base layer 662. By arranging the bonding layer 663, the assembling process between the insulating attaching sheet 66 and the end cover 61 can be simplified.

The base layer 662 is provided with a first through hole 664, and the bonding layer 663 is provided with a second through hole 665. The first through hole 664 is aligned with the second through hole 665 to form the avoiding through hole 661.

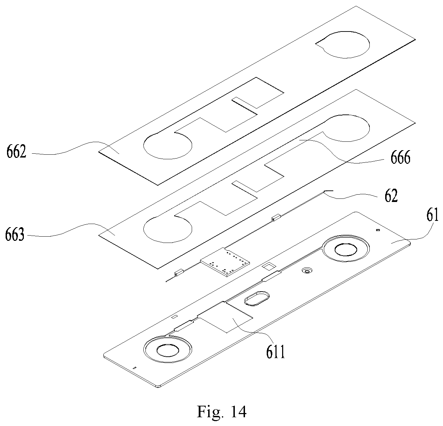

Fig. 14 shows an exploded schematic view of an end cover assembly according to some other embodiments of the present application.

As shown in Fig. 14, in some embodiments, the bonding layer 663 further includes a third through hole 666 covered by the base layer 662, and a portion of the detecting assembly 62 is accommodated in the third through hole 666.

Optionally, at least a portion of the first wire harness 622 is accommodated in the third through hole 666; and/or, at least a portion of the second wire harness 623 is accommodated in the third through hole 666.

In the embodiments of the present application, the first wire harness 622 and/or the second wire harness 623 is accommodated by removing a portion of the bonding layer 663, so that the standard for the depth of the concave part 611 can be reduced. The base layer 622 covers the first wire harness 622 and/or the second wire harness 623, so that the risk of the damage of the first wire harness 622 and/or the second wire harness 623 by the external component can be reduced, the leakage of electricity can be reduced, and the insulating performance can be improved.

According to some embodiments of the present application, the present application also provides a battery cell 5 including a casing 8, an electrode assembly 9 and the end cover assembly 6 according to any one of the above embodiments. The casing 8 is provided with the opening. The electrode assembly 9 is accommodated in the casing 8. The end cover 61 of the end cover assembly 6 is used to cover the opening.

According to some embodiments of the present application, the present application also provides a battery 2 including a plurality of end cover assemblies 6 according to any one of the above embodiments or the battery cell 5 as described above.

According to some embodiments of the present application, the present application also provides an electricity-consuming apparatus, including the battery cell 2 of any one of the above embodiments, which is used to supply the electric power to the electricity-consuming apparatus. The electricity-consuming apparatus may be a device or a system applying the battery cell 5 according to any one of the above embodiments.

As shown in Fig. 4 to Fig. 10, the embodiments of the present application provide the end cover assembly 6 of the battery cell, including the end cover 61 and the detecting assembly 62. The end cover 61 is provided with the concave part 611 on the side of the end cover away from the electrode assembly 9 of the battery cell 5; the detecting assembly 62 is used to detect the state information of the battery cell 5, and at least a portion of the detecting assembly 62 is accommodated in the concave part 611. The state information includes at least one of the temperature of the battery cell 5, the voltage of the battery cell 5, the deformation amount of the end cover 61 and the internal pressure of the battery cell 5.

A portion of the detecting assembly 62 protrudes from the concave part 611. The end cover 61 is provided with a convex part 612 on a side of end cover the facing the electrode assembly 9; at least a portion of the concave part 611 is formed at a position of the end cover 61 corresponding to the convex part 612. The end cover assembly 6 further includes an insulating member 63, arranged on a side of the end cover 61 facing the electrode assembly 9. The insulating member 63 is provided with the accommodating part 631, and at least a portion of the convex part 612 is accommodated in the accommodating part 631. The detecting assembly 62 includes the chip 621, the first wire harness 622 and the second wire harness 623, the chip 621 is electrically connected to the first electrode terminal 64 through the first wire harness 622 and electrically connected to the second electrode terminal 65 through the second wire harness 623, and the concave part 611 is configured to accommodate at least a portion of the chip 621. The end cover assembly 6 further includes the insulating attaching sheet 66, attached to a side of the end cover 61 away from the electrode assembly 9.

It should be noted that, in the absence of conflict, the embodiments and the features in the embodiments of the present application can be combined with one another.

At last, it should be noted that the above embodiments are only used to illustrate the technical solutions of the present application, but not to limit the technical solutions; although the present application has been described in detail with reference to the embodiments as described above, those skilled in the art should understand that: it is still possible to modify the technical solutions recited in the embodiments as described above, or equivalently replace some of the technical features, but these modifications or replacements do not cause the essence of the corresponding technical solutions to deviate from the gist and scope of the technical solutions of the embodiments of the present application.

## Claims

1. An end cover assembly of a battery cell, comprising
an end cover, provided with a concave part on a side of the end cover away from an electrode assembly of the battery cell; and
a detecting assembly, configured to detect a state information of the battery cell, and at least a portion of the detecting assembly being accommodated in the concave part.

2. The end cover assembly according to claim 1, wherein the state information comprises at least one of a temperature of the battery cell, a voltage of the battery cell, a deformation amount of the end cover and an internal pressure of the battery cell.

3. The end cover assembly according to claim 1, wherein the detecting assembly is entirely accommodated in the concave part.

4. The end cover assembly according to claim 1, wherein a portion of the detecting assembly protrudes from the concave part.

5. The end cover assembly according to claim 1, wherein the end cover is provided with a convex part on a side of the end cover facing the electrode assembly, and
at least a portion of the concave part is formed at a position of the end cover corresponding to the convex part.

6. The end cover assembly according to claim 5, wherein the concave part is entirely formed at the position of the end cover corresponding the convex part.

7. The end cover assembly according to claim 1, further comprising an insulating member, arranged on a side of the end cover facing the electrode assembly.

8. The end cover assembly according to claim 7, wherein the end cover is provided with a convex part on a side of the end cover facing the electrode assembly, and at least a portion of the concave part is formed at a position of the end cover corresponding to the convex part;
the insulating member is provided with an accommodating part, and at least a portion of the convex part is accommodated in the accommodating part.

9. The end cover assembly according to any one of claims 1-8, further comprising a first electrode terminal and a second electrode terminal with opposite polarities, wherein the first electrode terminal and the second electrode terminal are mounted on the end cover, and the detecting assembly is electrically connected to the first electrode terminal and the second electrode terminal.

10. The end cover assembly according to claim 9, wherein the detecting assembly comprises a chip, a first wire harness and a second wire harness, the chip is electrically connected to the first electrode terminal through the first wire harness and electrically connected to the second electrode terminal through the second wire harness, and
the concave part is configured to accommodate at least a portion of the chip.

11. The end cover assembly according to claim 10, wherein the concave part is configured to accommodate at least a portion of the first wire harness and at least a portion of the second wire harness.

12. The end cover assembly according to claim 10 or 11, wherein the first wire harness comprises a first wire harness segment, a second wire harness segment and a first connector, the first wire harness segment is connected to the chip, the second wire harness segment is connected to the first electrode terminal, and the first connector is configured to connect the first wire harness segment with the second wire harness segment.

13. The end cover assembly according to any one of claims 10-12, wherein the chip comprises at least one of a voltage sensor, a temperature sensor and a displacement sensor, the voltage sensor is electrically connected to the first wire harness and the second wire harness, and both of the temperature sensor and the displacement sensor are connected to the end cover.

14. The end cover assembly according to any one of claims 1-13, further comprising an insulating attaching sheet, attached to a side of the end cover away from the electrode assembly.

15. The end cover assembly according to claim 14, wherein the insulating attaching sheet is provided with an avoiding through hole, configured to expose at least a portion of the detecting assembly.

16. A battery cell comprising:
a casing, provided with an opening;
an electrode assembly, accommodated in the casing; and
the end cover assembly according to any one of claims 1-15, the end cover being configured to cover the opening.

17. A battery comprising the end cover assembly according to any one of claims 1-15 or the battery cell according to claim 16.

18. An electricity-consuming apparatus, comprising the battery according to claim 17, which is configured to supply electric power.
